# EUROPÄISCHE PATENTSCHRIFT

(11) **EP 0 724 924 B1**
(45) Veröffentlichungstag und Bekanntmachung des Hinweises auf die Patenterteilung: **29.04.1998**
(21) Anmeldenummer: 96106069.6
(22) Anmeldetag: 22.02.1994
(51) Int. Cl.: B23B 31/08

(54) **Werkzeughalter, insbesondere Schnellwechselfutter**
Tool holder, particularly quick-release chuck
Porte-outil, en particulier mandrin à changement rapide

(30) Priorität: 30.04.1993 DE 4314235
(43) Veröffentlichungstag der Anmeldung: 07.08.1996
(62) Teilanmeldung aus: 94102629.6
(73) Patentinhaber: OTTO BILZ, Werkzeugfabrik GmbH & Co., 73760 Ostfildern (DE)
(72) Erfinder: Bäder, Siegfried, 73257 Köngen (DE); Höfle, Lothar, 73760 Ostfildern (DE); Babel, Gerhard, 73660 Baltmannsweiler (DE)
(74) Vertreter: Kratzsch, Volkhard, Dipl.-Ing.

(56) Entgegenhaltungen:
- EP-A- 0 464 335
- DE-A- 3 902 559
- US-A- 4 752 088

## Beschreibung

Die Erfindung bezihet sich auf einen Werkzeughalter, insbesondere Schnellwechselfutter, der im Oberbegriff des Anspruchs 1 genannten Art.

Es ist ein Werkzeughalter dieser Art bekannt (DE-A-39 02 559), bei dem am Gehäuse ein der zentralen Kühlmittelführung dienender Rohrteil fest angebracht ist, der sich durch die Aufnahme hindurch erstreckt und zusammen mit dem Gehäuse als eine Einheit relativ zur Aufnahme beweglich ist. Der Rohrteil muß gegenüber dem Kopf an verschiedenen Stellen abgedichtet sein. Es besteht der Nachteil, daß bei der Relativverschiebung zwischen dem Kopf und dem Gehäuse die Drucksäule des unter Druck stehenden Kühlmittels mitbewegt wird. Aufgrund dieser mitbewegten Drucksäule des Kühlmittels ergeben sich mitunter unkontrollierte Relativverschiebungen zwischen dem Gehäuse und dem Kopf. Der Werkzeughalter mit dieser Kühlmittelführung ist relativ kompliziert und kostenaufwendig. Seine Montage ist aufwendig.

Der Erfindung liegt die Aufgabe zugrunde, einen Werkzeughalter, insbesondere ein Schnellwechselfutter, der im Oberbegriff des Anspruchs 1 genannten Art zu schaffen, der diese Nachteile beseitigt.

Die Aufgabe ist bei einem Werkzeughalter, insbesondere Schnellwechselfutter, der im Oberbegriff des Anspruchs 1 genannten Art gemäß der Erfindung durch die Merkmale im Kennzeichnungsteil des Anspruchs 1 gelöst. Vorteilhafte Weiterbildungen dazu enthalten die Ansprüche 2 bis 8. Dadurch, daß das der inneren Kühlmittelführung durch den Werkzeughalter dienende Rohr fest am Kopf angebracht ist, wird bei der Relativverschiebung zwischen Kopf und Gehäuse nicht die Drucksäule des unter Druck stehenden Kühlmittels mit bewegt. Etwaige unkontrollierte Relativverschiebungen zwischen Gehäuse und Kopf, die auf eine mitbewegte Drucksäule des Kühlmittels evtl. zurückzuführen sind, sind damit völlig ausgeschaltet. Die Kühlmittelführung mit den einzelnen Komponenten ist einfacher, kostengünstiger und erlaubt eine kürzere Bauweise des Werkzeughalters, der zugleich auch im Durchmesser kompakter gestaltet werden kann. Der Werkzeughalter ist ferner leichter zu montieren. Von Vorteil ist ferner, daß bei dieser Konzeption bei nicht eingesetztem Schnellwechseleinsatz zwischen dem Abschlußglied und dem Sperring ein selbsttätiger Verschluß der Kühlmittelkanäle konstruktiv verwirklichbar ist, so daß bei entnommenem Schnellwechselweinsatz kein Kühlmittel austreten kann.

Weitere Einzelheiten, insbesondere Erfindungsmerkmale, sowie Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile, auch wenn diese nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert.
Es zeigen:
- Fig. 1: einen schematischen axialen Längsschnitt eines Werkzeughalters,
- Fig. 2: einen schematischen Schnitt entlang der Linie II-II in Fig. 1.

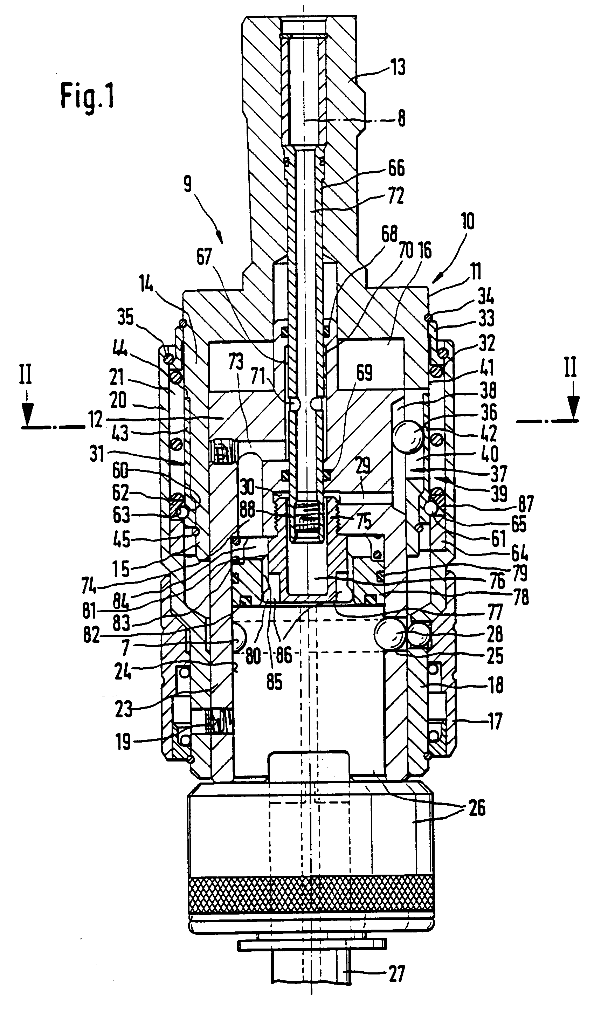

Der in den Zeichnungen gezeigte Werkzeughalter 9 besteht insbesondere aus einem Schnellwechselfutter 10, vorzugsweise zum Geindeschneiden, Gewindeformen od. dgl.. Das Schnellwechselfutter 10 weist eine Aufnahme 11 und ein Gehäuse 12 auf. Die Aufnahme 11 ist am in Fig. 1 oberen Ende 13 zum Einsetzen in eine nicht gezeigte Maschinenspindel, Werkzeugaufnahme od. dgl. einer Werkzeugmaschine eingerichtet, wobei dieses Ende 13 z. B. als Schaft ausgebildet ist, der unmittelbar oder unter Zwischenfügung eines Anpassungselements in der nicht gezeigten Maschinenspindel, Werkzeugaufnahme od. dgl. aufnehmbar und mit dieser zur Drehmitnahme koppelbar ist.

Am gegenüberliegenden, in Fig. 1 unten befindlichen Ende weist die Aufnahme 11 einen Kopf 14 auf, der mit einer Zylinderwandung 15 versehen ist, innerhalb der eine koaxiale zylindrische Öffnung 16 enthalten ist, die in Fig. 1 nach unten hin offen ist. In dieser Öffnung 16 ist das Gehäuse 12 undrehbar, jedoch in axialer Längsrichtung entsprechend der Längsmittelachse 8 relativverschiebbar, aufgenommen und geführt.

Das Gehäuse 12 ist etwa umgekehrt topfförmig gestaltet und weist im unteren Teil eine Zylinderwandung 23 auf, die eine koaxiale zylindrische und in Fig. 1 nach unten offene Öffnung 24 umschließt, in die ein nur angedeuteter üblicher Schnellwechseleinsatz 26 einsetzbar und damit axial und drehmomentübertragend kuppelbar ist. Der Schnellwechseleinsatz 26 trägt ein Werkzeug 27, das z.B. zum Gewindeschneiden, Gewindeformen od.dgl. geeignet ist. Die axiale formschlüssige Arretierung und Drehmitnahme des eingesetzten Schnellwechseleinsatzes 26 erfolgt in üblicher Weise (DE-OS 39 02 559) über mindestens eine Haltekugel 28, die in einer Radialöffnung 25 der Zylinderwandung 23 des Gehäuses 12 gehalten ist. Die Haltekugel 28 greift formschlüssig in eine äußere Ringnut 7 des Schnellwechseleinsatzes 26 ein. Es können auch mehrere, in Umfangsrichtung in Abständen angeordnete Haltekugeln 28 vorgesehen sein.

Die Haltekugel 28 wird mittels einer äußeren Betätigungshülse 17 betätigt, die eine Außenhülse 18 umgibt und relativ dazu in Axialrichtung verschiebbar ist. Die Außenhülse 18 umgreift die Zylinderwandung 23 und ist auf dieser fest aufgesetzt und mittels z.B. einer Gewindeschraube 19 fest verbunden. In Fig. 1 nach oben hin erweitert sich der Innendurchmesser der Außenhülse 18 derart, daß diese mit einem oberen zylindrischen Hals 20 die Zylinderwandung 15 des Kopfes 14 unter Bildung eines Ringraumes 21 dazwischen umschließt. In diesem Ringraum 21 ist eine axiale Längenausgleichseinrichtung 31 enthalten, die axial zwischen dem Gehäuse 12 und der Aufnahme 11 wirksam ist und einen axialen Längenausgleich bei einer Relativverschiebung in beiden Achsrichtungen, somit auf Zug und auf Druck, ermöglicht. Zugleich ist die Längenausgleichseinrichtung 31 als Anschnittdruckverstärker bei Druck in Axialrichtung gemäß Fig. 1 von oben nach unten wirksam. Die Längenausgleichseinrichtung 31 enthält im Ringraum 21 eine einzige Druckfeder 32 für den Längenausgleich in der einen bzw. in der anderen Achsrichtung. Die Druckfeder 32 ist mit dem oberen Ende an einem Ring 33 abgestützt, der über einen Sprengring 34 an der Aufnahme 11 gegen Verschiebung in Fig. 1 nach oben gesichert ist. Über einen Sprengring 35 auf der Innenseite des Halses 20 kann bei Relativverschiebung des Gehäuses 12 in Fig. 1 nach unten der Ring 32 ebenfalls nach unten verschoben werden. Bei einer Relativverschiebung des Gehäuses 12 mit der Außenhülse 18 in Fig. 1 nach oben bleibt der Ring 33 als Widerlager für die Druckfeder 32 stehen. Dies ist dann der Fall, wenn z.B. beim Bohren ein Axialdruck von der Maschinenspindel über die Aufnahme 11 her auf das Werkzeug 27 wirkt und dieser nach Ansprechen des Anschnittdruckverstärkers von der Druckfeder 32 aufgenommen wird, da hierbei die Aufnahme 11 mit dem Ring 33 relativ zum Gehäuse 12 in Fig. 1 nach unten bewegt wird unter Zusammendrücken der Druckfeder 32.

Der Kopf 14 ist mit dem Gehäuse 12 in Axialrichtung und Umfangsrichtung über zumindest einen Mitnahmekörper 36 gekuppelt, der zwischen dem Kopf 14 und dem Gehäuse 12 angeordnet ist. Dabei ist der mindestens eine Mitnahmekörper 36 teilweise in einer zugeordneten Längsnut 37 des Kopfes 14 und teilweise in einer zugeordneten Längsnut 38 des Gehäuses 12 gehalten, so daß darüber die Drehmomentübertragung erfolgen kann und der Mitnahmekörper 36 bei der Relativverschiebung zwischen dem Kopf 14 und dem Gehäuse 12 abrollen kann, so daß sich eine leichtgängige Relativverschiebung ergibt.

Eine der wesentlichen Besonderheiten liegt darin, daß der mindestens eine Mitnahmekörper 36 zwischen dem Kopf 14 und dem Gehäuse 12 hinsichtlich seiner Position in Längsrichtung, also in Richtung etwa parallel zur Längsmittelachse 8, führungsfrei angeordnet ist und mittels eines elastischen Spanngliedes 39 von außen nach innen mit einer Andrückkraft beaufschlagt ist, die den mindestens einen Mitnahmekörper 36 in dieser genannten Position hält, d.h. verhindert, daß der Mitnahmekörper 36 in Fig. 1 in den Längsnuten 37, 38 nach unten herabfällt und dann bei der Relativverschiebung zwischen dem Kopf 14 und dem Gehäuse 12 nicht mehr abrollen kann. Hierdurch ist im Vergleich zu bekannten Werkzeughaltern eine erhebliche Vereinfachung erzielt, da auf diese Weise eine sonst notwendige und eingesetzte Kugelführungshülse, in der der mindestens eine Mitnahmekörper 36 in Position gehalten ist, entbehrlich ist. Derartige Kugelführungshülsen sind nicht nur selbst kostenaufwendig, sondern sie bedingen am Kopf 14 und am Gehäuse 12 entsprechend genau gearbeitete Führungsflächen für die Kugeln der Kugelführungshülse. Diese besondere Bearbeitung ist ebenfalls kostenaufwendig. Außerdem bedingen Kugelführungshülsen einen größeren Durchmesser des Werkzeughalters. Schließlich hat sich gezeigt, daß Verunreinigungen in den Bereich einer Kugelführungshülse gelangen können, die dann in relativ kurzer Zeit ein Verklemmen zur Folge haben können. Auch diese Probleme sind bei der genannten Gestaltung, die eine Kugelführungshülse entbehrlich macht, beseitigt.

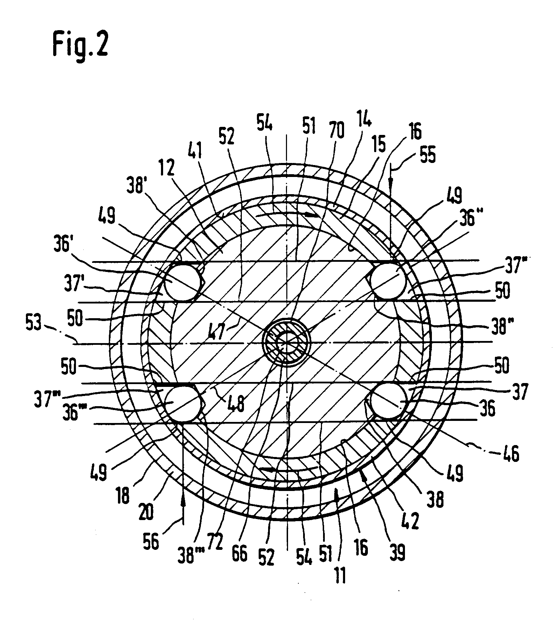

Wie sich aus Fig. 1 und 2 ergibt, ist die je Mitnahmekörper 36 vorgesehene Längsnut 37 im Kopf 14 als in Querrichtung durchgängiger Längsschlitz 40 innerhalb der Zylinderwandung 15 des Kopfes 14 ausgebildet. Der mindestens eine Mitnahmekörper 36 greift in Querrichtung durch den zugeordneten Längsschlitz 40 im Kopf 14 hindurch und steht zumindest geringfügig über die Außenseite 41 des Kopfes 40 im Bereich dieses Längsschlitzes 40 vor.

Das elastische Spannglied 39 besteht in besonders vorteilhafter, einfacher Weise aus einem Umfangsspannglied 42, das den Kopf 14 auf dessen Außenseite 41 im Bereich des mindestens einen Mitnahmekörpers 36 zumindest teilweise umfaßt und außen an dem vorstehenden Teil des mindestens einen Mitnahmekörpers 36 angreift und dort die von außen nach innen gerichtete Andrückkraft entfaltet. Das Umfangsspannglied 42 ist aus einem elastisch federnden Ringteil, z.B. einem Ring oder einer Zylinderhülse, insbesondere aus Metall, gebildet. Es ist in axialer Längsrichtung am Kopf 14, insbesondere auf dessen Außenseite 41, festgelegt. In der Außenseite 41 ist hierzu eine Ringaufnahme 43 mit oberer Axialschulter 44 enthalten, an der das Umfangsspannglied 42 in Achsrichtung gemäß Fig. 1 nach oben axial fixiert ist. Die Fixierung auf der gegenüberliegenden Seite, in Fig. 1 nach unten, geschieht mittels eines Sprengringes 45 an der Zylinderwandung 15 des Kopfes 14.

Wie sich aus Fig. 2 ergibt, ist das Umfangsspannglied 42 ein geschlossener Ringteil. Bei einem anderen, nicht gezeigten Ausführungsbeispiel kann das Umfangsspannglied 42 statt dessen auch in axialer Längsrichtung an einer Stelle unterbrochen, z.B. geschlitzt, sein.

Nachfolgend sind weitere wesentliche Besonderheiten der Längsnuten 37, 38 für den mindestens einen Mitnahmekörper 36, die ein Längsnutpaar bilden, anhand von Fig. 2 erläutert.

Die mindestens eine Längsnut 38 des Gehäuses 12 weist einen Trapezquerschnitt auf, der symmetrisch ist. Die Symmetrielinie 46 verläuft innerhalb einer Diametralebene 47 und geht somit durch die Mitte des Gehäuses 12 hindurch. Ersichtlich ist innerhalb dieser Diametralebene 47 ein weiteres gleichartiges Längsnutpaar 37', 38' mit zugeordnetem Mitnahmekörper 36' vorgesehen, das dem Längsnutpaar 37, 38 mit Mitnahmekörper 36 diametral gegenüberliegt. In analoger Weise sind im Bereich einer anderen Diametralebene 48 noch einmal zwei einander diametral gegenüberliegende Längsnutpaare 37'', 38'' mit zugeordnetem Mitnahmekörper 36'' bzw. 37''', 38''' mit zugeordneten Mitnahmekörper 36''' vorhanden. Somit sind insgesamt vier über den Umfang verteilte Längsnuten 37, 37', 37'', 37''' im Kopf 14 vorgesehen und ferner in zugeordneter Weise vier über den Umfang verteilte Längsnuten 38, 38', 38'', 38''' im Gehäuse 12 , wobei je Längsnutpaar ein Mitnahmekörper 36 bzw. 36' bzw. 36'' bzw. 36''' vorhanden ist. Von besonderer Bedeutung ist dabei, daß die beiden Diametralebenen 47 und 48 unter einem Winkel von etwa 60° und einem Komplementärwinkel von etwa 120° zueinander verlaufen. Dies bedeutet, daß z.B. die beiden Längsnutpaare 37, 38 und 37'', 38'' (Fig. 2, rechts) auf einem Umfangsbereich liegen und dabei einen Umfangswinkelabstand von etwa 60° voneinander haben. Dies bedeutet ferner, daß auf der gegenüberliegenden Seite,in Fig. 2 links, zwei Längsnutpaare 37', 38' und 37''', 38''' auf dem dortigen Umfangsbereich und gegenüber den erstgenannten Längsnutpaaren in Umfangsrichtung versetzt angeordnet sind und auch dort einen Umfangswinkelabstand von etwa 60° voneinander haben. Zwischen zwei derart beabstandeten Längsnutpaaren befindet sich ein längsnutfreier Umfangsbereich von etwa 120° Umfangswinkel. Dieser letztgenannte längsnutfreie Umfangsbereich ist z.B. vorgesehen zwischen den beiden Längsnutpaaren 37', 38' und 37'', 38'' oder auf der gegenüberliegenden Seite zwischen den beiden Längsnutpaaren 37, 38 und 37''', 38'''.

Die Längsnut 37 und die drei übrigen gleichartigen Längsnuten 37', 37'', 37''' des Kopfes 14 sind allesamt gleich gestaltet. Sie weisen zwei einander gegenüberliegende und zueinander parallele Flanken 49, 50 auf, die jeweils innerhalb der Ebene einer Sekante 51 bzw. 52 verlaufen, welche in Radialabstand von der Längsmittelachse 8 und somit der Mitte des Werkzeughalters 9 und somit etwa parallel zu einer durch die Mitte hindurchführenden Diametralebene 53 verlaufen.

Der mindestens eine Mitnahmekörper 36 je Längsnutpaar besteht mit Vorteil aus einer Mitnahmekugel. Der Abstand zwischen den beiden Flanken 49, 50 der jeweiligen Längsnut 37, 37', 37'', 37''' des Kopfes 14 entspricht etwa dem Durchmesser dieser Mitnahmekugel oder ist zumindest geringfügig größer bemessen als dieser Durchmesser.

Diese beschriebene Gestaltung macht den Werkzeughalter 9 besonders einfach und verleiht diesem die gleichen Vorteile sowohl bei Rechtslauf gemäß Pfeil 54 als auch bei gegensinnig dazu gerichtetem Linkslauf. Wird der Kopf 14 von der nicht gezeigten Maschinenspindel her im Uhrzeigersinn gemäß Fig. 2 und Pfeil 54, also im Rechtslauf, angetrieben, so sind hinsichtlich der Drehmomentübertragung auf das Gehäuse 12 das Längsnutpaar 37'', 38'' mit Mitnahmekörper 36'', insbesondere Mitnahmekugel,und auf der Diametralebene 48 diametral gegenüberliegend das andere Längsnutpaar 37''', 38''' mit Mitnahmekörper 36''', insbesondere Mitnahmekugel, wirksam. Dabei drückt die jeweilige Flanke 49 der Längsnut 37'' und der Längsnut 37''' gegen den Mitnahmekörper 36'' bzw. 36''', wobei die Kraft an der Stelle und gemäß angedeutetem Pfeil 55 bzw. 56 wirksam ist, die im wesentlichen genau durch den Mittelpunkt der Mitnahmekugel geht und rechtwinklig zur Flanke 49 gerichtet ist.

Da die Kraftrichtung gemäß den Pfeilen 55, 56 im wesentlichen rechtwinklig zur jeweiligen Ebene der Sekante 51 und mit Abstand außerhalb der Längsnut 38'', 38''' im Gehäuse 12 verläuft, wird unter der Wirkung dieser jeweiligen Kraft der Mitnahmekörper 36'', 36''', insbesondere die Mitnahmekugel, so belastet, daß diese eher nach innen gedrückt wird, auf keinen Fall unter dieser Beaufschlagung nach außen wandern und dabei etwa das elastische Umfangsspannglied 42 belasten kann. Die Mitnahmekörper 36'', 36''' belasten somit bei diesem Rechtslauf und den wirkenden Kräften in Richtung der Pfeile 55, 56 das Umfangsspannglied 42 nicht, das somit sehr dünn und elastisch ausgebildet sein kann. Im einfachsten Fall reicht eine dünne metallische Zylinderhülse, die mit geringer Vorspannung außen auf die Zylinderwandung 15 des Kopfes derart aufgezogen ist, daß sie die geringfügig nach außen überstehenden Mitnahmekörper 36, 36', 36'', 36''' spannend umfassen und mit der von außen nach innen gerichteten elastischen Kraft beaufschlagen kann.

Wird die Aufnahme 11 im Linkslauf und somit gegensinnig zu den Pfeilen 54 und im Gegenuhrzeigersinn gemäß Fig. 2 angetrieben, so werden die Mitnahmekörper 36, 36' auf der Diametralebene 47 von den Flanken 49 der Längsnuten 37, 37' beaufschlagt, wobei ebenfalls auf die Mitnahmekörper 36, 36' Kräfte wirken, die etwa rechtwinklig zu dieser Flanke 49 und zur Ebene der Sekante 51 gerichtet sind und etwa durch die Mitte des Mitnahmekörpers 36, 36',insbesondere der Mitnahmekugel, gehen und dabei-bezogen auf die Längsnut 38, 38'-derart außen wirksam sind, daß der jeweilige Mitnahmekörper 36, 36' dadurch eher nach innen gezwungen wird und auf jeden Fall an einer Bewegung nach außen und einer Kräftebeaufschlagung des Umfangsspanngliedes 42 gehindert ist. Dadurch können die einzelnen Mitnahmekörper 36, 36', 36'', 36''', insbesondere Mitnahmekugeln, in einfacher Weise zwischen dem Kopf 14 und dem Gehäuse 12 hinsichtlich der Position in Längsrichtung führungsfrei angeordnet werden und über das Umfangsspannglied 42, z.B. in Form einer dünnen metallischen Zylinderhülse, von außen nach innen mit einer Andrückkraft beaufschlagt werden, die ausreicht, die jeweiligen Mitnahmekörper im zugeordneten Längsnutpaar in Position zu halten.

Die eingangs erläuterte Längenausgleichseinrichtung 31 befindet sich auf der Außenseite des Umfangsspanngliedes 42, das am in Fig. 1 unteren Ende auf seiner Außenseite eine Ringnut 60 enthält, innerhalb der mehrere Kugeln 61 mit einem Umfangsteil lagern. Im Ringraum 21 ist ferner ein das Umfangsspannglied 42 umgebender Stützring 62 mit einseitiger Schrägfläche 63 enthalten, der mittels der Druckfeder 32 mit seiner Schrägfläche 63 in axialer Längsrichtung, d.h. in Fig. 1 nach unten, gegen einen jeweils überstehenden Umfangsteil der Kugeln 61 gedrückt ist. Im Ringraum 21 , der zwischen dem Kopf 14 und der Außenseite des Umfangsspanngliedes 42 gebildet ist, ist ein etwa zylinderhülsenförmiger Kugelhalter 64 angeordnet, der in einer Axialrichtung, und zwar in Fig. 1 nach unten hin, an der Außenhülse 18 anliegt, und zwar an einer axialen Ringschulter, die im Übergangsbereich zum Hals 20 gebildet ist. Der Kugelhalter 64 enthält im in Fig. 1 oberen Bereich radial gerichtete Öffnungen 65, z. B. Bohrungen, in denen die Kugeln 61 gehalten sind. Dieser die Bohrungen 65 enthaltende Endbereich ist so abgeschrägt, daß er sich in Fig.1 nach oben hin verjüngt, wobei der Schrägungswinkel demjenigen der Schrägfläche 63 des Stützringes 62 zumindest im wesentlichen entspricht. Der Stützring 62 ist an diesem abgeschrägten, zugewandten Ende 87 des Kugelhalters 64 angeordnet, und zwar derart, daß der Stützring 62 mit seiner Schrägfläche 63 mit den an diesem Ende 87 radial zumindest geringfügig überstehenden Kugeln 61 in Berührung steht.

Wirkt von der Maschinenspindel, Werkzeugaufnahme od. dgl. und von der Aufnahme 11 her eine axial gerichtete Druckkraft bei axial abgestütztem Werkzeug 27, so werden die Kugeln 61 von der Flanke der Ringnut 60 des Umfangsspanngliedes 42 beaufschlagt. Je stärker die Kraft ist, umso stärker ist diese Beaufschlagung der Kugeln 61. Wird eine durch die Druckfeder 32 und die Schräge der Schrägfläche 63 des Stützringes 62 vorgegebene Gegenkraft überschritten, wandern die Kugeln 61 nach außen unter Verschiebung des Stützringes 62 gegen die Wirkung der Druckfeder 32. Dadurch wird für den Anschnitt z.B. eines Gewindebohrers ein gewünschter, einstellbarer Druck vorgegeben. Die Druckfeder 32 kann sodann bei der Relativverschiebung zwischen dem Kopf 14 und dem Gehäuse 12 einen Längenausgleich auf Druck bewirken.

Wird gegensinnig bei axial festgehaltenem Werkzeug 27 und Gehäuse 12 die Aufnahme 11 mit Kopf 14 axial in Fig. 1 nach oben gezogen, so werden die in der Ringnut 60 lagernden Kugeln 61 und über die Kugeln 61 der Kugelhalter 64 mitsamt dem an den Kugeln 61 anliegenden Stützring 62 mit dem Kopf 14 nach oben bewegt, wodurch die Druckfeder 32 ebenfalls auf Druck belastet ist und somit ein Längenausgleich zwischen dem Kopf 14 und dem Gehäuse 12 in Zugrichtung ermöglicht ist.

Der Werkzeughalter 9 ist ferner mit einer inneren Kühlmittelführung versehen, die besonders einfach gestaltet ist, was dadurch erreicht ist, daß die Längenausgleichseinrichtung 31 nach außen und in den äußeren Umfangsbereich der Zylinderwandung 15 verlagert ist. Im einzelnen weist das Schnellwechselfutter 10 ein zentrales inneres, der Kühlmittelführung dienendes Rohr 66 auf, das mit einem in Fig. 1 oberen Ende an der Aufnahme 11 befestigt ist und das sich von dort in die koaxiale Zylinderöffnung 16 und in eine zentrale Bohrung 67 des Gehäuses 12 hineinerstreckt. Die Bohrung 67 enthält einen an beiden axialen Enden mittels Dichtungsringen 68, 69 abgedichteten Ringraum 70 für das Kühlmittel, der somit innenseitig vom Rohr 66 und außen von der Bohrung 67 begrenzt ist. Der Ringraum 70 steht einerseits über mindestens einen Kanal 71 im Rohr 66, z.B. einer Bohrung in der Rohrwand, mit dem Inneren 72 des Rohres 66 in Verbindung. Andererseits ist der Ringraum 70 mit Kanälen 73, 74 im Gehäuse 12 verbunden, von denen der Kanal 73 z.B. radial und der Kanal 74 z.B. etwa achsparallel verläuft, wobei beide Kanäle 73, 74 im wesentlichen außerhalb der Mitte des Gehäuses 12 verlaufen. Der Kanal 74 führt bis zur koaxialen zylindrischen Öffnung 24 des Gehäuses 12.

Das freie, in Fig. 1 unten befindliche Ende des Rohres 66 ist geschlossen, z.B. durch einen Stopfen verschlossen. Es erstreckt sich durch eine zentrale axiale Bohrung 75 im Gehäuse 12 hindurch, die im Durchmesser größer ist und z.B. als Gewindebohrung ausgebildet ist. Das Ende des Rohres 66 erstreckt sich dort in einen Raum 76 hinein, der im Inneren eines etwa topfförmigen Abschlußgliedes 77 gebildet und nach unten abgeschlossen ist. Das Abschlußglied 77 ist mit einem Zapfen in die Bohrung 75 eingeschraubt und somit am Gehäuse 12 befestigt.

Das Abschlußglied 77 ist von einem Sperring 78 umgeben, der in der zylindrischen Öffnung 24 des Gehäuses 12 axial verschiebbar gehalten und in Umfangsrichtung gegenüber dem Gehäuse 12, insbesondere dessen Zylinderwandung 23, mittels eines Dichtungsringes 79 abgedichtet ist.

Das Abschlußglied 77 weist am axialen Ende zumindest einen radial auskragenden Vorsprung 80 auf, insbesondere eine Ringschulter, wobei der Vorsprung 80 als Anschlag für den Sperring 78 bei entnommenem Schnellwechseleinsatz 26 dient. Der Sperring 78 weist in Zuordnung dazu an einem Ende mindestens einen radial nach innen vorstehenden Anschlag 81 auf, z.B. eine Anschlagschulter. Wird der Schnellwechseleinsatz 26 entnommen und dadurch der Sperring 78 in Axialrichtung frei, der über eine stirnseitige Dichtung 82 dicht gegen die zugewandte Stirnseite des Schnellwechseleinsatzes angedrückt ist, so wird der Sperring 78 durch die Kraft einer ihn belastenden Feder 83 in Fig. 1 nach unten verschoben, bis der Anschlag 81, insbesondere die Anschlagschulter, am Vorsprung 80, insbesondere der Ringschulter, des Abschlußgliedes 77 anschlägt und dadurch ein Herausdrücken des Sperrringes 78 verhindert ist. Wird hiernach wieder ein Schnellwechseleinsatz 26 eingesetzt, so wird dadurch der Sperring 78 gegen die Wirkung der Feder 83 in die Position gemäß Fig. 2 eingeschoben.

Das bis zum Kanal 74 gelangende Kühlmittel wird durch Kanäle des Abschlußgliedes 77 und des Sperringes 78 in Fig. 1 nach unten geführt, so daß es durch die zentrale Öffnung im Schnellwechseleinsatz 26 und z.B. durch eine Öffnung im Werkzeug 27 hindurchgelangen kann. Hierzu weist der Sperrring 78 am in Fig. 1 oberen Ende mindestens einen Querkanal 84, z.B. eine Quernut,auf, die mit dem Kanal 74 in Verbindung steht. Der Querkanal 84 steht mit einem Ringraum 85 in Verbindung, der umfangsseitig zwischen dem Abschlußglied 77 und dem Sperring 78 gebildet ist.

Das Abschlußglied 77 weist im Bereich des freien, in Fig.1 unteren, Endes außenseitig mindestens eine Ausnehmung 86 oder zwei diametral gegenüberliegende Ausnehmungen dieser Art auf, wobei die Ausnehmung 86 mit dem Ringraum 85 zur Kühlmittelführung in Verbindung steht.

Das Kühlmittel wird z.B. in das Innere des Endes 13 der Aufnahme 11 eingeführt und gelangt in das Innere 72 des Rohres 66, von dem es über den mindestens einen Kanal 71 in den Ringraum 70 gelangt und von dort über die Kanäle 73, 74 zu dem mindestens einen Querkanal 84 am inneren Ende des Sperringes 78. Vom mindestens einen Querkanal 84 gelangt das Kühlmittel durch den Ringraum 85 und die mindestens eine Ausnehmung 86, wo es austritt und in eine innere zentrale Öffnung des Schnellwechseleinsatzes 26 eintritt.

Das Abschlußglied 77 und der Sperring 78 können so gestaltet sein, daß bei entnommenem Schnellwechseleinsatz 26 und weiter nach unten verschobenem Sperring 78 der Kühlmitteldurchlaß vom Ringraum 85 nach außen gesperrt ist, so daß bei entnommenem Schnellwechseleinsatz 26 kein Kühlmittel austreten kann.

Die beschriebene innere Kühlmittelführung mit Hilfe des in der Aufnahme 11 befestigten Rohres 26 ist besonders einfach und kostengünstig. Da bei einer Relativverschiebung zwischen dem Gehäuse 12 und dem Kopf 14 die Drucksäule des unter Druck stehenden Kühlmittels nicht mit bewegt wird, ist eine etwaige Verfälschung der Relativposition zwischen dem Kopf 14 und dem Gehäuse 12 ausgeschlossen. Ferner ist eine Druckentlastung erreicht.

Bei einem anderen, nicht gezeigten Ausführungsbeispiel ist der Werkzeughalter 9, insbesondere das Schnellwechselfutter 10, nicht mit der beschriebenen inneren Kühlmittelführung ausgestattet und dadurch besonders einfach. Je nach Gestaltung kann auch die Längenausgleichseinrichtung 31 entfallen.

Der Werkzeughalter 9, insbesondere das Schnellwechselfutter 10, ist kompakt, ermöglicht einen relativ kleinen Durchmesser, ist hinsichtlich der axialen Länge möglichst kurz und bei allem betriebssicher und nicht störanfällig, so daß auch bei eindringendem Schmutz dessen Funktion nicht behindert ist,und ist kostengünstig gestaltet und kostengünstig herstellbar, so daß es zu einer erheblichen Kostenreduzierung im Vergleich zu bekannten Schnellwechselfuttern führt.

Der im Inneren des Abschlußgliedes 77 gebildete Raum 76, in den sich das freie Ende des Rohres 66 hineinerstreckt und bei der Relativbewegung zwischen dem Kopf 14 und dem Gehäuse 12 mehr oder weniger tief eintaucht, ist nach außen entlüftet, wodurch verhindert ist, daß sich hier ein Druck aufbauen kann, der die Relativbewegung beeinträchtigen könnte. Zur Entlüftung dient im Gehäuse 12 ein Entlüftungskanal 29, der hier z. B. aus mindestens einem Radialkanal besteht, der nach außen bis zu einer Längsnut 38 geführt ist und somit über die Längsnut 38, ferner die Längsnut 37 und den Ringraum 21 entlüftet ist. Der Entlüftungskanal 29 steht im inneren Bereich des Gehäuses 12 mit einem zentralen Raum 30 in Verbindung, der seinerseits mit dem Raum 76 im Abschlußglied 77 komuniziert. Bei einem nicht gezeigten Ausführungsbeispiel kann dies z. B. durch eine oder mehrere Öffnungen im Rohr 66, insbesondere in der Rohrwandung, geschehen. Beim gezeigten Ausführungsbeispiel ist zwischen dem Abschlußglied 77 und dem sich in letzteres hineinerstreckenden freien Ende des Rohres 66 ein Ringraum 88 belassen, der die Verbindung zwischen dem Raum 76 und dem zentralen Raum 30 und Entlüftungskanal 29 herstellt, so daß in besonders einfacher Weise dadurch der Raum 76 entlüftet ist.

## Patentansprüche

1. Werkzeughalter, insbesondere Schnellwechselfutter, vorzugsweise zum Gewindeschneiden, Gewindeformen od. dgl., mit einer Aufnahme (11), die mit einem Ende (13) in einer Maschinenspindel, Werkzeugaufnahme od. dgl. aufnehmbar ist und am gegenüberliegenden Ende einen Kopf (14) aufweist, der eine koaxiale zylindrische Öffnung (16) enthält, in der undrehbar, jedoch in axialer Längsrichtung relativverschiebbar ein Gehäuse (12) aufgenommen und geführt ist, das eine koaxiale zylindrische Öffnung (24) enthält, in die ein Schnellwechseleinsatz (26) für ein Werkzeug (27) einsetzbar und damit kuppelbar ist, wobei zwischen dem Kopf (14) und dem Gehäuse (12) zumindest ein Mitnahmekörper (36) angeordnet ist, der teilweise in einer zugeordneten Längsnut (37) des Kopfes (14) und teilweise in einer zugeordneten Längsnut (38) des Gehäuses (12) gehalten ist, der Drehmomentübertragung zwischen beiden dient und bei der Relativverschiebung zwischen Kopf (14) und Gehäuse (12) abrollen kann,
**gekennzeichnet durch**
ein zentrales inneres,der Kühlmittelführung dienendes Rohr (66), das mit einem Ende an der Aufnahme (11) befestigt ist und das sich von dort in den Kopf (14) und deren Öffnung (16) und in eine zentrale Bohrung (67) des Gehäuses (12) hineinerstreckt, die einen an beiden axialen Enden abgedichteten, innenseitig vom Rohr (66) begrenzten Ringraum (70) für das Kühlmittel enthält, der einerseits über mindestens einen Kanal (71) im Rohr (66) mit dem Inneren (72) des Rohres (66) in Verbindung steht und der andererseits mit insbesondere außerhalb der Mitte verlaufenden Kanälen (73, 74) im Gehäuse (12) verbunden ist, welche bis zur zylindrischen Öffnung (24) des Gehäuses (12) führen.

2. Werkzeughalter nach Anspruch 1,
**dadurch gekennzeichnet,**
daß das freie Ende des Rohres (66) geschlossen ist und sich durch eine zentrale axiale Bohrung (75) im Gehäuse (12) hindurch und in einen Raum (76) hineinerstreckt, der mittels eines etwa topfförmigen Abschlußgliedes (77) gebildet und abgeschlossen ist, das am Gehäuse (12) befestigt ist.

3. Werkzeughalter nach Anspruch 1 oder 2,
**dadurch gekennzeichnet,**
daß das Abschlußglied (77) von einem Sperring (78) umgeben ist, der in der zylindrischen Öffnung (24) des Gehäuses (12) axial verschiebbar gehalten und in Umfangsrichtung gegenüber dem Gehäuse (12, 23) abgedichtet ist.

4. Werkzeughalter nach einem der Ansprüche 1 bis 3,
**dadurch gekennzeichnet,**
daß das Abschlußglied (77) am axialen Ende zumindest einen radial auskragenden Vorsprung (80), z.B. eine Ringschulter, aufweist und daß der Sperring (78) an einem Ende mindestens einen radial nach innen vorstehenden Anschlag (81), z.B. eine Anschlagschulter, aufweist, der bei mittels Federkraft (83) ausgeschobenem Sperring (78) an dem Vorsprung (80) des Abschlußgliedes (77) anschlägt.

5. Werkzeughalter nach einem der Ansprüche 1 bis 4,
**dadurch gekennzeichnet,**
daß der Sperring (78) an einem Ende mindestens einen Querkanal (84), z.B. eine Quernut, aufweist, der zur Kühlmittelführung mit einem etwa achsparallelen Kanal (74) im Gehäuse (12) sowie mit einem Ringraum (85) in Verbindung steht, der umfangsseitig zwischen dem Abschlußglied (77) und dem Sperring (78) gebildet ist.

6. Werkzeughalter nach einem der Ansprüche 1 bis 5,
**dadurch gekennzeichnet,**
daß das Abschlußglied (77) im Bereich des freien Endes außenseitig mindestens eine Ausnehmung (86) aufweist, die mit dem Ringraum (85) zwischen dem Abschlußglied (77) und dem Sperring (78) zur Kühlmittelleitung in Verbindung steht.

7. Werkzeughalter nach einem der Ansprüche 2 bis 6,
**dadurch gekennzeichnet**,
daß der Raum (76) des Abschlußgliedes (77), in den sich das freie Ende des Rohres (66) hineinerstreckt,nach außen entlüftet ist.

8. Werkzeughalter nach Anspruch 7,
**dadurch gekennzeichnet**,
daß der Raum (76) über zumindest eine Öffnung im Rohr (66) und/oder einen Ringraum (88) zwischen dem Abschlußglied (77) und dem sich in letzteres hineinerstreckenden freien Ende des Rohres (66) mit einem Entlüftungskanal (29) im Gehäuse (12), insbesondere einem Radialkanal darin, nach außen entlüftet ist.

## Claims

1. Tool holder, in particular quick release chuck, preferably for cutting threads, shaping threads or the like, with a mounting (11), which can be mounted at one end (13) in a machine shaft, tool mount or the like, and at the opposite end has a head (14) comprising a coaxial, cylindrical opening (16) in which a housing (12) is mounted and guided non-rotatably, but displaceably in axial longitudinal direction, which housing contains a coaxial cylindrical opening (24) into which a quick release insert (26) for a tool (27) can be inserted and coupled therewith, whereby between the head (14) and the housing (12) at least one driving body (36) is arranged, which is partly held in an assigned longitudinal groove (37) of the head (14) and partly in an assigned longitudinal groove (38) of the housing (12), which serves to transfer torque between the two and can roll on the relative displacement between the head (14) and housing (12),
**characterised** by
a central internal tube (66) to guide the coolant, which is secured at one end to the mounting (11) and which extends from this point into the head (14) and the opening (16) and into a central bore (67) of the housing (12), which bore (67) comprises an annular chamber (70) for the coolant sealed at both axial ends and internally delimited by the tube (66), which annular chamber (70) communicates on the one hand via at least one channel (71) in the tube (66) with the interior (72) of the tube (66) and on the other hand with channels (73, 74) in the housing (12) extending substantially outside the centre, which channels lead up to the cylindrical opening (24) of the housing (12).

2. Tool holder according to claim 1,
**characterised in that**
the free end of tube (66) is closed and extends through a central axial bore (75) in the housing (12) and into a chamber (76) which is formed by a roughly cup-shaped sealing element (77) and is closed, the sealing element (77) being secured onto the housing (12).

3. Tool holder according to claim 1 or 2,
**characterised in that**
the sealing element (77) is surrounded by a locking ring (78), which is axially displaceably held in the cylindrical opening (24) of the housing (12) and is sealed in the peripheral direction from the housing (12, 13).

4. Tool holder according to one of claims 1 to 3
**characterised in that**
the sealing element (77) has at the axial end at least one radially protruding projection (80), e.g. an annular shoulder, and the locking ring (78) has at one end at least one radially inwardly projecting stop (81), e.g. a stop shoulder, which with the locking ring (78) pushed out by the force of a spring (83) hits the projection (80) of the sealing element (77).

5. Tool holder according to one of claims 1 to 4
**characterised in that**
the locking ring (78) has at one end at least one transverse channel (84), e.g. a transverse groove, which for guiding the coolant is connected with a roughly axially parallel channel (74) in the housing (12) and with an annular chamber (85) which is formed on the periphery between the sealing element (77) and the locking ring (78).

6. Tool holder according to one of claims 1 to 5,
**characterised in that**
the sealing element (77) in the region of its free end has on the outer side at least one recess (86) which communicates with the annular chamber (85) between the sealing element (77) and the locking ring (78) for transporting the coolant.

7. Tool holder according to one of claims 2 to 6,
**characterised in that**
the chamber (76) of the sealing element (77) into which the free end of the pipe (66) extends is vented to the outside.

8. Tool holder according to claim 7,
**characterised in that**
the chamber (76) is vented to the outside via at least one opening in the pipe (66) and/or an annular chamber (88) between the sealing element (77) and the free end of the tube (66) extending into the latter with a vent channel (29) in the housing (12), in particular a radial channel.

## Revendications

1. Porte-outil, en particulier un mandrin à changement rapide, de préférence pour le filetage, le formage de filets, ou autres opérations similaires, avec un fourreau (11), logeable à une extrémité (13) dans une broche de machine, un fourreau porte-outil, ou autres, et présentant sur l'extrémité opposée une tête (14), qui comporte une ouverture coaxiale cylindrique (16) dans laquelle est reçu est guidé, sans possibilité de rotation mais avec une possibilité de déplacement relatif dans le sens longitudinal axial, un boîtier (12) qui comporte une ouverture cylindrique coaxiale (24) dans laquelle peut être monté, donc accouplé, un montage rapporté à changement rapide (26) pour un outil (27), un corps d'entraînement (36), au moins, étant disposé entre la tête (14) et le boîtier (12), ce corps étant en partie maintenu dans une rainure longitudinale associée (37) de la tête (14) et en partie dans une rainure longitudinale associée (38) du boîtier (12), servant à la transmission du couple entre les deux éléments précités et pouvant rouler en cas de déplacement relatif entre la tête (14) et le boîtier (12), caractérisé par un tube (66) central interne, qui sert à l'amenée du liquide de coupe, est fixé à une extrémité sur le fourreau (11), d'où il s'étend dans la tête (14), dans l'ouverture (16) de cette dernière, et dans un alésage central (67) du boîtier (12), cet alésage comportant un compartiment annulaire (70) pour le liquide de coupe, rendu étanche sur les deux extrémités axiales et délimité côté interne par le tube (66), lequel compartiment est relié d'une part, par l'intermédiaire d'au moins un canal (71) prévu dans le tube (66), à l'intérieur (72) du tube (66) et, d'autre part, à des canaux (73, 74), en particulier excentrés, du boîtier (12), qui mènent jusqu'à l'ouverture cylindrique (24) du boîtier (12).

2. Porte-outil suivant la revendication 1, caractérisé en ce que l'extrémité libre du tube (66) est fermée et s'étend au travers d'un alésage central axial (75) du boîtier (12) et dans un compartiment (76), formé et fermé au moyen d'un élément terminal (77) à peu près en forme de pot, fixé sur le boîtier (12).

3. Porte-outil suivant l'une des revendications 1 et 2, caractérisé en ce que l'élément terminal (77) est enveloppé par une bague d'arrêt (78), maintenue sans possibilité de déplacement axial dans l'ouverture cylindrique (24) du boîtier (12), et rendue étanche dans le sens périphérique par rapport au boîtier (12, 23).

4. Porte-outil suivant l'une des revendications 1 à 3, caractérisé en ce que l'élément terminal (77) présente sur l'extrémité axiale au moins une saillie radiale (80), un épaulement annulaire par exemple, et en ce que la bague d'arrêt (78) présente, sur une extrémité, au moins une butée (81) en saillie radiale interne, un épaulement de butée par exemple, qui bute, lorsque la bague d'arrêt (78) est repoussée par force de ressort (83), sur la saillie (80) de l'élément terminal (77).

5. Porte-outil suivant l'une des revendications 1 à 4, caractérisé en ce que la bague d'arrêt (78) présente sur une extrémité au moins un canal oblique (84), une rainure oblique par exemple, relié, pour l'amenée du liquide de coupe, à un canal (74) du boîtier (12) à peu près parallèle à l'axe, ainsi qu'à un compartiment annulaire (85), formé côté périphérique entre l'élément terminal (77) et la bague d'arrêt (78).

6. Porte-outil suivant l'une des revendications 1 à 5, caractérisé en ce que l'élément terminal (77) présente côté externe, dans la zone de l'extrémité libre, au moins un évidement (86) relié pour l'amenée du liquide de coupe au compartiment annulaire (85) prévu entre l'élément terminal (77) et la bague d'arrêt (78).

7. Porte-outil suivant l'une des revendications 2 à 6, caractérisé en ce que le compartiment (76) de l'élément terminal (77), dans lequel s'étend l'extrémité libre du tube (66), est mis à l'atmosphère vers l'extérieur.

8. Porte-outil suivant la revendication 7, caractérisé en ce que le compartiment (76) est mis à l'atmosphère vers l'extérieur par un canal (29) du boîtier (12), par un canal radial en particulier, par le biais d'au moins une ouverture dans le tube (66) et/ou d'un compartiment annulaire (88), compris entre l'élément terminal (77) et l'extrémité libre du tube (66) s'étendant dans ce dernier.
